## Europäisches Patentamt

## European Patent Office

## Office européen des brevets

(11) Veröffentlichungsnummer: **0 308 529**

**A1**

(12) **EUROPÄISCHE PATENTANMELDUNG**

(21) Anmeldenummer: **87113947.3**

(22) Anmeldetag: **23.09.87**

(51) Int. Cl.⁴: **F28F 27/02 , B01D 53/26**

(43) Veröffentlichungstag der Anmeldung:
**29.03.89 Patentblatt 89/13**

(84) Benannte Vertragsstaaten:
**AT BE CH DE ES FR GB GR IT LI LU NL SE**

(71) Anmelder: **VIA Gesellschaft für Verfahrenstechnik mbH**
**Heerdter Lohweg 63-71**
**D-4000 Düsseldorf 11(DE)**

(72) Erfinder: **Burk,Jürgen**
**Rottgärten 10**
**D-4000 Düsseldorf(DE)**

(74) Vertreter: **Stratmann, Ernst, Dr.-Ing.**
**Schadowplatz 9**
**D-4000 Düsseldorf 1(DE)**

(54) **Rohrbündelwärmetauscher mit Verteilerplatte.**

(57) Es wird ein Rohrbündelwärmetauscher beschrieben, der insbesondere für Drucklufttrockner (10) geeignet ist und aus einem im wesentlichen zylindrischen Gehäuse (12) besteht, in dem ein oder mehrere Rohrbündel im wesentlichen senkrecht angeordnet sind, wobei die oberen Enden der Rohre (14) in einer die Außenwände der einzelnen Rohre (14) dicht umschließenden Abdichteinrichtung gehalten sind. Zwischen der Abdichteinrichtung und der oberen Gehäuseabschlußwand wird eine für alle Rohre (14) gemeinsame Zufuhrkammer (18) für Kühlmittel gebildet, in welcher Zufuhrkammer (18) zwischen einem durch das Gehäuse (12) hindurchgeführte Zuflußrohr (30) für das Fluid und in einzelnen Rohrenden des Rohrbündels eine Verteilerplatte (70) angeordnet ist, die vor allem nahe dem Rand das Fluid verstärkt durchlassende Einschnitte oder Durchbrüche besitzt, um so eine möglichst gleichförmige Verteilung des zugeführten Fluids über die einzelnen Rohre (14) des Rohrbündels zu ermöglichen.

Fig. 1.

Fig.3.

## Rohrbündelwärmetauscher mit Verteilerplatte

Die Erfindung betrifft einen Rohrbündelwärmetauscher, insbesondere für Drucklufttrockner oder dergleichen, bestehend aus einem im wesentlichen zylindrischen Gehäuse, in dem ein (oder mehrere) Rohrbündel im wesentlichen senkrecht angeordnet ist, und wobei die oberen Enden der einzelnen Röhre des Rohrbündels von einer die Außenwände der einzelnen Rohre dicht umschließenden Abdichteinrichtung gehalten sind, zwischen welche Abdichteinrichtung und der oberen Gehäuseabschlußwand oder Gehäuseabschlußdeckeleinrichtung (Gehäusedom) eine allen Rohrenden gemeinsame Zufuhrkammer für Kühlmittel (im wesentlichen flüssiges Wärmetauschermedium, Fluid) gebildet ist.

Ein derartiger Rohrbündelwärmetauscher ist in der DE 36 01 588 A1 der Anmelderin bereits beschrieben. Bei derartigen Rohrbündelwärmetauschern gibt es Ausführungs formen, bei denen der Durchflußwiderstand der einzelnen Rohre des Rohrbündels verhältnismäßig hoch ist. Eine derartige Ausführungsform ist beispielsweise eine solche mit einer Rohr-in-Rohr-Anordnung, bei der das Kühlmittel (im wesentlichen flüssiges Wärmetauschermedium, Fluid) durch den Raum hindurchgedrückt wird, der zwischen zwei ineinander gesteckten Rohren sich ergibt. Diese Art von Konstruktion hat den Vorteil des niedrigeren Wärmeübergangswiderstandes zwischen dem Kühlmittel oder Fluid und der äußeren Rohrwandung, da die Entfernung zwischen der äußeren Rohrwandung und den am weitesten entfernten Bereichen des Kühlmittels oder Fluids innerhalb des äußeren Rohrs sich auf den Abstand der Außenfläche des Innenrohres zur Innenfläche des Außenrohres beschränkt.

Die Zufuhr von Kühlmittel zu derartigen Rohr-in-Rohr-Systemen erfolgte bisher vorzugsweise mit Hilfe von Venturi-Verteilern, das sind trichterförmige Gussteile, in denen sich ein Zentralkanal in eine große Anzahl von Einzelkanälen verzweigt, an die dann die einzelnen Rohre des Rohrbündels angeschlossen werden müssen.

Eine derartige Venturi-Verteileranordnung ist daher mechanisch recht aufwendig und in der Herstellung teuer.

Die einzelnen Rohrenden einfach in der gemeinsamen Zufuhr kammer für Kühlmittel enden zu lassen, stellt eine viel billigere und einfachere Lösung dar. Sie hat allerdings den Nachteil, daß eine gleichförmige Verteilung des am oberen Ende der Zufuhrkammer zugeführten Kühlmittels recht schwierig ist, was dazu führt, daß bestimmte Rohre in einem Rohrbündel mit Kühlmittel besser versorgt werden als andere.

Durch Anordnen von Verdrängungskörpern in den einzelnen Rohren des Rohrbündels kann das im Stand der Technik dargestellte Rohrbündel bereits gleichmäßiger versorgt werden, d. h. die Verteilung verbessert werden, weil durch die kleineren Strömungsmengen pro Einzelrohr das Kühlmittel mehr Zeit hat, die Öffnungen aller vorhandenen Rohre eines Rohrbündels zu erreichen, jedoch ist in manchen Anwendungsfällen die Verteilung immer noch nicht optimal.

Aufgabe der Erfindung ist es, das Kühlmittel oder Fluid auf die einzelnen Rohre eines Rohrbündels ohne großen zusätzlichen Aufwand möglichst gleichförmig zu verteilen.

Gelöst wird die Aufgabe dadurch, daß in der Zufuhrkammer zwischen einem durch die obere Gehäuseabschlußwand oder durch den Gehäuseabschlußdeckel geführten Zufußrohr für das Kühlmittel oder Fluid und der Abdichteinrichtung bzw. den oberen Enden der einzelnen Rohre der Rohrbündel eine Verteilerplatte anzuordnen, die nahe ihrem Rand Durchbrüche oder am Rand Einschnitte aufweist. Durch diese Verteilerplatte wird das von oben zugeführte Kühlmittel oder Fluid zunächst gleichförmig an die Randbereiche des zylindrischen Gehäuses gedrängt, von denen es sich dann auf die darunterliegenden Mündungen der einzelnen Rohre des Rohrbündels ergießt. Es hat sich gezeigt, daß zwar die nahe dem Rand liegenden Rohrenden näher an diesen Durchbrüchen oder Einschnitten liegen, daß aber gleichwohl die mehr in der Mitte liegenden Rohrenden im wesentlichen die gleiche Menge an Fluid oder Kühlmittel erhalten, dies offensichtlich deshalb, weil die Anzahl der Öffnungen pro Winkelabschnitt und Radiuseinheit zur Mitte hin laufend abnimmt und dadurch die dort benötigte Kühlmittel- oder Fluidmenge zur ausreichenden Versorgung der einzelnen Rohre ebenfalls fortlaufend abnimmt. Ist die Verteilerplatte nicht vorhanden, ergießt sich das Kühlmittel oder das Fluid vorzugsweise erst auf den mittleren Bereich des Rohrbündels und fließt von dort dann zu den viel mehr Kühlmittel oder Fluid benötigenden Randbereichen, so daß in diesem Falle der mittlere Bereich viel besser versorgt wird als der Randbereich. Bei Vorhandensein der erwähnten Verteilerplatte kehren sich die Verhältnisse um, und zwar in der Weise, daß die verschiedenen Einflüsse sich im wesentlichen gegenseitig kompensieren und dadurch eine praktisch gleichförmige Verteilung des Kühlmittels oder Fluids auf die einzelnen Rohrenden-sofern diese über den Zylindergehäusequerschnitt im wesentlichen gleichförmig verteilt sind -erfolgt.

Am einfachsten ist eine Verteilerplatte dadurch herzustellen, daß sie die Umfangsform eines Mehrkants erhält, insbesondere die eines Sechsecks, wobei die Verteilerplatte mit den Ecken dieses Sechsecks an der Wand des zylindrischen Gehäuses befestigt werden kann, beispielsweise durch Punktverschweißung.

Die Verteilwirkung kann noch verbessert und verfeinert werden, wenn - bei über die gesamte Fläche verteilten angelöteten (oder auf andere Art druckdicht befestigten) Rohren, deren Rohrenden nicht oder nur geringfügig über die Metallplatte hinaus in das Lumen der Zufuhrkammer hineinragen - diese Rohre mit sogenannten Verdrängerkörpern ausgestattet werden, die die Durchflußgeschwindigkeit erhöhen und dadurch verhindern, daß von Rohren, die besonders günstig gelegen sind, anderen, ungünstiger gelegenen Rohren Kühlmittel oder Fluid entzogen wird, so daß es zu einer ungleichmäßigen Beschickung der einzelnen Rohre kommt.

Durch die Verteilerplatte entstehen auch Strömungswirbel, sofern das Verhältnis von Abstand zwischen Metallplatte (oder Mündungen der Rohre) und Verteilerplatte und dem Innendurchmesser des zylindrischen Gehäuses in einem bestimmten Bereich liegt, der von 1 : 3 bis 1 : 10 reicht, vorzugsweise aber zwischen 1 : 4 und 1 : 6 liegt, während das Verhältnis von Abstand zwischen Verteilerplatte und Rohrmündung des Zuflußrohres für Fluid zum Innendurchmesser des Gehäuses zwischen 1 : 10 und 1 : 3, vorzugsweise aber zwischen 1 : 6 und 1 : 4 liegt. Durch diese Abstandsverhältnisse ergeben sich Strömungsverhältnisse, die zusätzlich eine Vermischung und damit verbesserte Verteilung des Fluids oder Kühlmittels ergeben.

Statt der Verteilerplatte die Form eines Mehrkants, beispielsweise eines Sechsecks zu geben, könnten auch bogenförmige Einschnitte am Rand vorgesehen werden, wodurch die entstehenden seitlichen Öffnungen entweder ver kleinert (wenn der Bogen gegenüber der geraden Sechseckkante nach außen gerichtet ist) oder eine größere Öffnung ergibt, nämlich dann, wenn der bogenförmige Einschnitt gegenüber der geraden Kante nach innen gerichtet ist.

Alternativ könnte die Verteilerplatte an ihrem Rand auch rechteckige oder auch spitzwinklige Einschnitte tragen, die zwar etwas schwieriger herzustellen sind, aber eine noch genauere Verteilung in Umfangsrichtung ermöglicht.

Statt die Verteilerplatte, die bei Anpassung an das Zylinderinnengehäuse zunächst rund wäre, durch Abschneiden oder Einschneiden von Materialstücken in die gewünschte Form zu bringen, könnte diese Verteilerplatte auch nahe ihrem Rand Durchbrüche aufweisen, beispielsweise insbesondere Kreisdurchbrüche. Um sicherzustellen, daß die Zufuhr von Kühlmittel oder Fluid nahe dem Rand größer bleibt als in der Mitte der Verteilerplatte, sollte gemäß einer noch anderen Weiterbildung der Erfindung die Verteilerplatte mit Durchbrüchen versehen sein, die nahe dem Rand einen größeren Durchmesser als in der Mitte aufweisen, oder nahe dem Rand einen geringeren gegenseitigen Abstand aufweisen, als in der Nähe des Zentrums (bzw. in der Nähe des Zuflusses für das Fluid, sofern dieser Zufluß nicht im Zentrum angeordnet sein sollte, was jedoch meist der Fall sein wird, da dies zusätzlich die Verteilung erleichtert).

Eine weitere Maßnahme zur besseren Verteilung wäre die bereits erwähnte Anordnung von Verdrängerkörpern innerhalb der Rohre, wobei derartige Verdrängerkörper beispielsweise aus an einem Ende breitgedrückten Rohren bestehen können, wobei das breitgedrückte Ende in den unterhalb der Verteilerplatte befindlichen Raum hineinragen. Durch dieses Hineinragen wird ein bestimmtes Maß an Verwirbelung der vorbeifließenden Kühlflüssigkeit verwirkt, so daß auch dieses Merkmal zur gleichförmigeren Verteilung beiträgt.

Die Erfindung wird nachfolgend anhand von Ausführungsbeispielen näher erläutert, die in den Zeichnungen dargestellt ist.

Es zeigt:

Fig. 1 in einer teilweise geschnittenen Seitenansicht das obere Ende eines die Form eines Rohrbündelwärmetauschers aufweisenden Drucklufttrockners mit der erfindungsgemäßen Verteilerplatte;

Fig. 2 in einer ähnlichen Ansicht wie Fig. 1 das untere Ende des Drucklufttrockners;

Fig. 3 in einer Draufsicht einer Ausführungsform der erfindungsgemäßen Verteilerplatte;

Fig. 4 eine Draufsicht auf die die einzelnen Rohre eines Rohrbündels haltende Abdichteinrichtung in Form einer Rohrplatte mit der Darstellung der einzelnen Rohrmündungen sowie eine teilweise geschnittene Seitenansicht;

Fig. 5 eine vergrößerte Darstellung eines mit einem Verdrängungsrohr versehenen Rohrbündels, wobei das Verdrängungsrohr ein plattgedrücktes Ende aufweist;

Fig. 6 eine vergrößerte Darstellung des plattgedruckten Endes von der Seite und im Schnitt; und

Fig. 7 eine vergrößerte Darstellung des plattgedrückten Endes von oben.

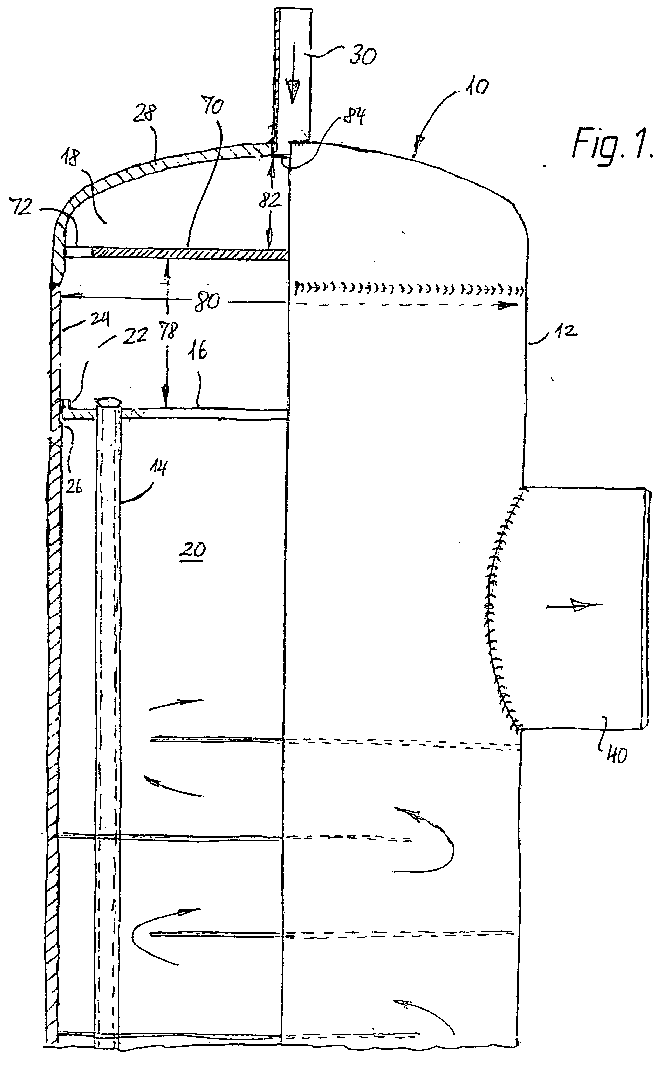

In Fig. 1 ist in einer teilweise geschnittenen Seitenansicht ein Drucklufttrockner 10 dargestellt, der die erfindungsgemäßen Merkmale aufweist. Der Drucklufttrockner umfaßt ein zylindrisches Gehäuse 12 mit einer Wärmetauscherrohre 14 haltenden plattenartigen Halteeinrichtung oder Rohrplatte 16. Die einzelnen Rohre 14 sind mit ihrem oberen Ende mit der Außenfläche in der Rohrplatte, die in Fig. 4 noch einmal von oben und der Seite dargestellt ist, druckdicht eingesetzt, beispielsweise verlötet. Die Druckplatte 16 kann eine sehr große Anzahl von derartigen Rohren tragen, bei der in Fig. 4 erkennbaren Ausführungsform sind es beispielsweise 227 Rohre, von denen allerdings nur die nahe dem Randbereich dargestellt sind, während die in den übrigen Bereichen vorhandenen Rohre einfach durch die Schnittstelle von zwei sich kreuzender Linien angedeutet ist.

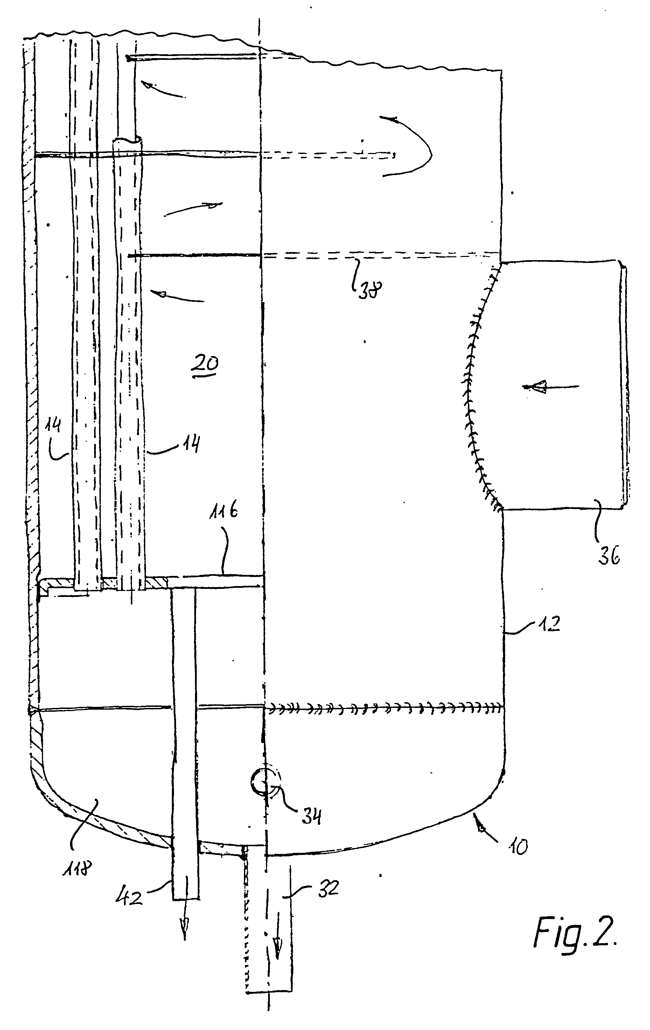

Die Platte 16 teilt das Gehäuse 12 des Druck-luftwärmetauschers 10 in einen Kühlmittelzufuhr-raum 18 und einen Druckluftraum 20 und ist in geeigneter Weise, beispielsweise mittels einer umbördelten Kante 22 an der Innenwand 24, die hier noch eine durch Innendurchmesservergrößerung entstandenen Absatz 26 bilden kann, gehalten, beispielsweise durch Verkleben oder Verschweißen. Die Zufuhr des Kühlmittels erfolgt über ein im Dom 28 des Gehäuses 10 angeordnetes Zufuhrrohr 30, das hier, wie meist üblich, im Zentrum des Doms angeordnet ist. In Fig. 2 ist das untere Ende des Druckluftrockners 10 zu erkennen, wobei in ähnlicher Weise wie am oberen Ende eine plattenförmige Halteeinrichtung 116 die unteren Enden der Wärmetauscherrohre 14 dicht umschließt und in analoger Weise an der Innenfläche des zylindrischen Gehäuses 12 befestigt ist. Auch trennt die Platte 116 den Druckluftraum 20 von einem Kühlmittelabfuhrraum 118 ab, von dem das Kühlmittel über einen Abzugstutzen 32 abgezogen werden kann, um nach entsprechender erneutem Wärmeenergieentzug in einem Kreislauf am Zufuhrrohr 30 wieder zugeführt zu werden.

Zur Steuerung des Kühlmittelumlaufs kann eine Sensoreinrichtung dienen, die die Temperatur oder auch den Druck des im Kühlmittelabfuhrraum 118 sich sammelnden Kühlmittels mißt, wobei ein derartiger Sensor über einen Durchbruch 34 in das Gehäuse eingeschoben werden kann.

Zu trocknende Druckluft wird über den Druckluftzufuhrstutzen 36 in den Druckluftraum 20 eingeführt und strömt, durch wechselseitig angeordnete Umlenkplatten 38 meanderförmig hin- und herge-leitet, in Gegenstromrichtung zur Kühlmittelströ-mungsrichtung nach oben und wird dabei durch die Oberflächen der von Kühlmittel durchflossenen Wärmetauscherrohre 14 bis auf eine Temperatur von nahe 0° bei Austritt aus dem Druckluftabzugsstutzen 40 abgekühlt. In der Druckluft enthaltene Feuchtigkeit kondensiert infolge der Temperaturerniedrigung und schlägt sich auf den Außenflächen der Wärmetauscherrohre 14 sowie auf den Umlenkplatten 38 und den Innenwänden des Gehäuses 12 nieder und läuft nach unten bis zur Platte 116, wo sie mittels nicht näher dargestellter Kondensatableiteinrichtungen über ein Rohr 42 abgezogen werden kann.

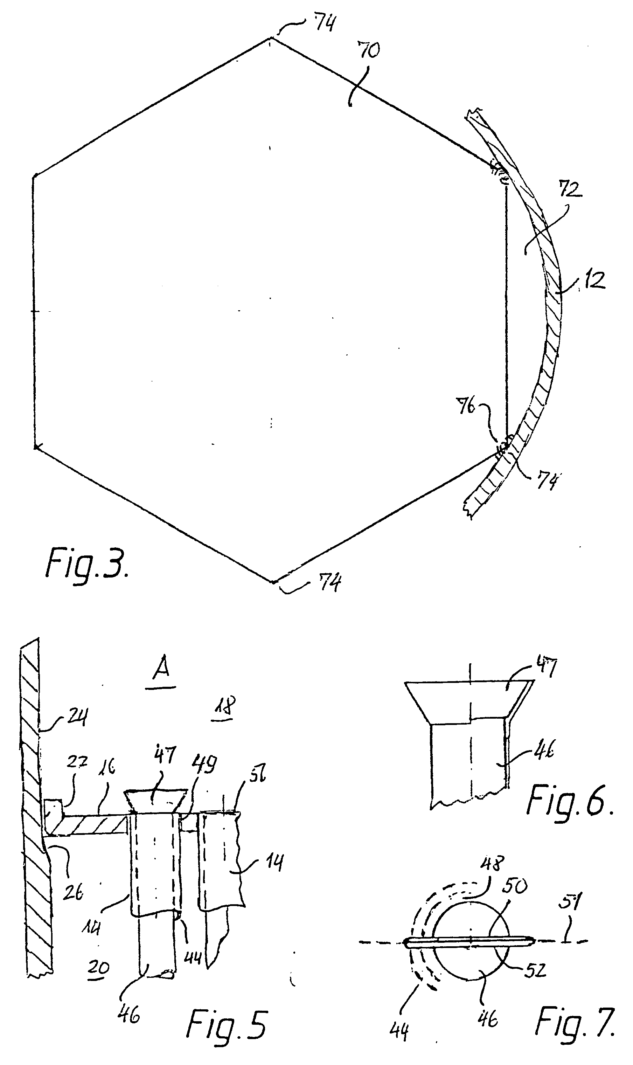

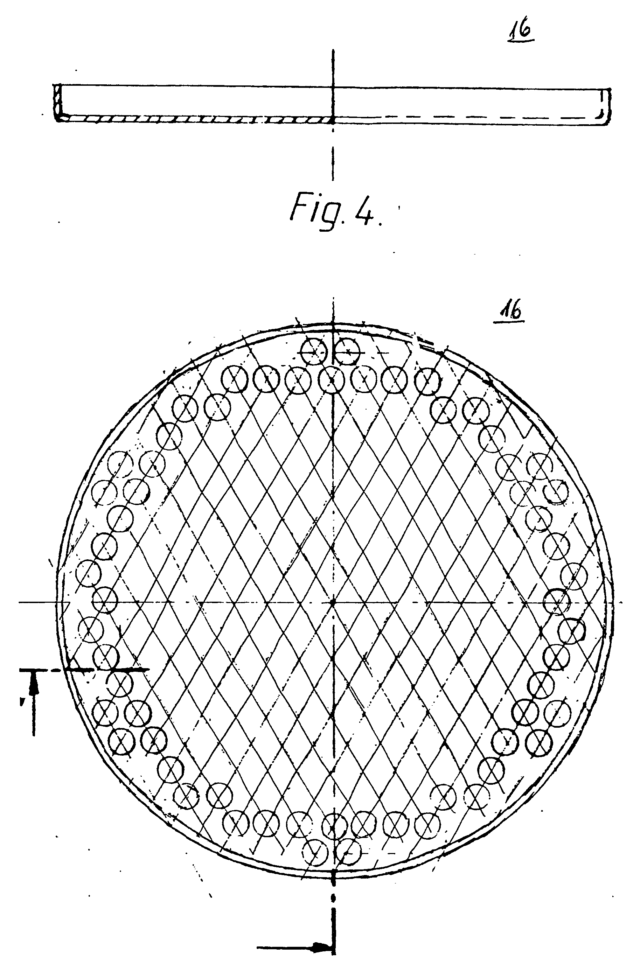

Um die einzelnen Wärmetauscherrohre 14 gleichförmig mit Kühlmittel oder Fluid zu versor-gen, das über den Zulaufstutzen 30 in den Kühl-mittelzufuhrraum 18 eingeleitet wird, dient eine Verteilerplatte 70, die zwischen dem Zuflußrohr 30 und der Rohrplatte 16 angeordnet ist und die nahe ihrem Rand Durchbrüche oder, wie hier dargestellt, am Rand Einschnitte 72 aufweist. Erreicht werden können diese nahe dem Rand oder am Rand befindlichen Durchbrüche oder Einschnitte dadurch, daß die Verteilerplatte gemäß der Darstellung von Fig. 3 die Umfangsform eines Mehrkants, hier eines Sechsecks erhält, wobei dann die Verteilerplatte 70 mit ihren Ecken 74 an der Wand des zylindrischen Gehäuses 12 befestigt werden kann, beispielsweise durch Punktverschweißung 76. Diese Konstruktion ist besonders einfach und billig in der Herstellung, weil die Grundplatte 70 durch einfaches Zurechtschneiden herstellbar ist und die anschließende Befestigung im Gehäuse durch bei-spielsweise sechs Punktschweißungen bewerkstel-ligt werden kann.

Diese Art der Verteilerplatte hat sich besonders bewährt bei einer Rohrplatte mit über die gesamte Fläche verteilt eingelöteten Rohrenden, wie in Fig. 4 dargestellt, wobei gemäß Fig. 5 die Rohrenden nicht oder doch nur geringfügig über die Rohrplatte hinaus in das Volumen der Zufuhrkammer 18 hineinragen.

Die Wirkungsweise der Verteilerplatte 70 ist besonders günstig, wenn das Verhältnis von Abstand 78 (oder, wenn die Enden der Rohre 14 weit in die Zufuhrkammer hineinragen sollten, Abstand zu den Mündungen dieser Rohre) und Verteilerplatte 70 und dem Innendurchmesser 80 des zylindrischen Gehäuses 12 zwischen 1 : 3 und 1 : 10 liegt. Besonders günstig sind Verhältnisse zwischen 1 : 4 und 1 : 6. Gleichzeitig sollte das Verhältnis von Abstand 82 zwischen Verteilerplatte 70 und Rohrmündung 84 des Fluidzuflusses 30 zum Innendurchmesser 80 des Gehäuses 12 zwischen 1 : 10 und 1 : 3 liegen, vorzugsweise zwischen 1 : 6 und 1 : 4.

Ist der Abstand 78 der Verteilerplatte 70 von der Rohrplatte 16 (bzw. den Rohrenden 56 der Wärmetauscherrohre 14, siehe Fig. 5) mit Bezug auf den Gehäuseinnendurchmesser 80 relativ klein, spielen Strömungswiderstände an der Oberfläche der Rohrplatte 16 eine verhältnismäßig größere Rolle. Man kann dies ausnutzen, indem in den Wärmetauscherrohren vorhandene Verdrängerkörper 46 so ausgestaltet sind, daß sie über das Rohrende 49 mit einem Kopf 47 hinausragen, wobei dieser Kopf 47 durch einfaches Breitdrücken des oberen Endes des Verdrängerrohrs 46 gebildet sein kann, siehe auch die Fig. 6 und 7, wo dieser Kopf mit den breitgedrückten Rohrwandteilen 50 und 52 in teilweise geschnittener Seitenansicht bzw. Draufsicht dargestellt ist. Der Kopf 47 bildet wegen seiner flachen Gestalt eine Art Umlenkflügel und kann somit die Strömung von Kühlmittel nahe der Oberfläche der Rohrplatte 16 steuern: Weist der Kopf oder Flügel 47, wie dargestellt, mit seiner Flügellängsachse 51 radial nach innen, wird dem an der Seite nach innen strömenden Fluid nur sehr wenig Strömungswiderstand entgegengesetzt. Verdreht man dagegen den Verdrängungskörper 46 aus dieser Richtung bis maximal 90° versetzt dazu, ergibt sich ein maximaler Strömungswiderstand für die von außen nach innen strömende Flüssigkeit. Mit Hilfe der Einstellung dieser Köpfe 47 gelingt somit unter Umständen eine Feineinstellung der Verteilung, falls dies zweckmäßig sein sollte.

Der Verdrängerkörper 46 dient im übrigen noch dazu, den Strömungswiderstand dadurch zu erhöhen, daß er das innere Lumen des äußeren Rohres 44 des Wärmetauscherrohres 14 auf einen im wesentlichen gleichförmig verlaufenden ringförmigen Raum 48 einschränkt und dadurch die Kühlflüssigkeit an die innere Oberfläche des äußeren Rohres 44 konzentriert und dadurch den Wärmeübergangswiderstand der Gesamtanordnung verbessert.

**Ansprüche**

1. Rohrbündelwärmetauscher, insbesondere für Drucklufttrockner (10) o. dgl., bestehend aus einem im wesentlichen zylindrischen Gehäuse (12), in dem ein oder mehrere Rohrbündel im wesentlichen senkrecht angeordnet sind, wobei die oberen Enden der einzelnen Rohre des Rohrbündels von einer die Außenwände der einzelnen Rohre dicht umschließenden Abdichteinrichtung gehalten sind, zwischen welcher Abdichteinrichtung und oberer Gehäuseabschlußwand oder Gehäuseabschlußdeckeleinrichtung (28) eine allen Rohrenden (14) gemeinsame Zufuhrkammer (18) für Kühlmittel oder sonstiges im wesentlich flüssiges Wärmetauschermedium (Fluid) gebildet ist, dadurch gekennzeichnet, daß in der Zufuhrkammer (18) zwischen einem durch die obere Gehäuseabschlußwand oder den Gehäuseabschlußdeckel (28) geführten Zuflußrohr (30) für das Kühlmittel oder Fluid und der Abdichteinrichtung (16) bzw. den oberen Enden der einzelnen Rohre der Rohrbündel eine Verteilerplatte (70) angeordnet ist, die nahe dem Rand Durchbrüche oder am Rand Einschnitte (72) aufweist.

2. Rohrbündelwärmetauscher nach Anspruch 1, dadurch gekennzeichnet, daß die Verteilerplatte (70) die Umfangsform eines Mehrkants, insbesondere eines Sechsecks aufweist, und daß die Verteilerplatte (70) mit den Ecken (74) an der Wand des zylindrischen Gehäuses (12) gehalten ist.

3. Rohrbündelwärmetauscher nach Anspruch 2, dadurch gekennzeichnet, daß die Verteilerplatte (70) durch Punktverschweißung (76) am Gehäuse (12) befestigt ist.

4. Rohrbündelwärmetauscher nach Anspruch 1, 2 oder 3, dadurch gekennzeichnet, daß die Abdichteinrichtung eine Rohrplatte (16) mit über die gesamte Rohrplattenfläche verteilten eingelöteten Wärmetauscherrohren (14) ist, und daß die Enden der Wärmetauscherrohre (14) nicht oder nur geringfügig über die obere Fläche der Rohrplatte (16) in das Lumen der Zufuhrkammer (18) hineinragen.

5. Rohrbündelwärmetauscher nach einem der Ansprüche 4 dadurch gekennzeichnet, daß das Verhältnis von Abstand zwischen Rohrplatte (16) (ggf. Mündung der Wärmetauscherrohre) und Verteilerplatte (70, 78), und dem Innendurchmesser (80) des zylindrischen Gehäuses (12) zwischen 1 : 3 und 1 : 10, vorzugsweise 1 : 4 bis 1 : 6 liegt, und daß das Verhältnis von Abstand (82) zwischen Verteilerplatte (70) und Rohrmündung (84) des Zuflußrohrs (30) für Fluid zum Innendurchmesser (80) des Gehäuses (12) zwischen 1 : 10 und 1 : 3, vorzugsweise aber 1 : 6 und 1 : 4 liegt.

6. Rohrbündelwärmetauscher nach Anspruch 1, dadurch gekennzeichnet, daß die Verteilerplatte (70) an ihrem Rand bogenförmige Einschnitte trägt.

7. Rohrbündelwärmetauscher nach Anspruch 1, dadurch gekennzeichnet, daß die Verteilerplatte (70) an ihrem Rand rechteckige oder spitzwinklige Einschnitte trägt.

8. Rohrbündelwärmetauscher nach Anspruch 1, dadurch gekennzeichnet, daß die Verteilerplatte nahe ihrem Rand Durchbrüche, vorzugsweise Kreisdurchbrüche, aufweist.

9. Rohrbündelwärmetauscher nach Anspruch 1, dadurch gekennzeichnet, daß die Verteilerplatte (70) mit Durchbrüchen versehen ist, die nahe dem Rand der Verteilerplatte (70) größeren Durchbruchdurchmesser und oder geringeren Durchbruchabstand als in der Nähe des Zentrums der Verteilerplatte, ggf. in der Nähe des Zuflusses für Fluid, falls dieser nicht im Zentrum vorgesehen ist, aufweisen.

10. Rohrbündelwärmetauscher nach einem der Ansprüche 1 bis 9, dadurch gekennzeichnet, daß die Wärmetauscherrohre (14) mit Verdrängerkörpern (46) ausgestattet sind.

11. Rohrbündelwärmetauscher nach Anspruch 10, dadurch gekennzeichnt, daß die Verdrängerkörper (46) aus an einem Ende breitgedrückten Rohren bestehen, und daß das breitgedrückte Ende (47) in den Raum unterhalb der Verteilerplatte (70) flügelartig hineinragt und durch seine Ausrichtung bezüglich der radialen Strömungsrichtung des zugeführten Fluids eine Umverteilung des Fluids nahe der Verteilerplatte ermöglicht.

Fig.1.

Fig.2.

Fig.3.

74
70
72
12
76
74
74

A
18
24
22 16 47 49 51
26
14
44
14
20
46

Fig.5

47
46

Fig.6.

48
50
51
44 46 52

Fig.7.

_16_

Fig. 4.

_16_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 630 276 (DAINE)<br>* Spalte 4, Zeilen 9-16; Figur 3 *<br>--- | 1 | F 28 F 27/02<br>B 01 D 53/26 |
| Y | DE-A-3 511 037 (VOITH TURBO)<br>* Spalte 2, Zeile 47 - Spalte 3, Zeile 12; Figuren 1,2b,3b *<br>--- | 1 | |
| A | DE-A-3 136 866 (SCHWELMER EISENWERK MÜLLER)<br>* Zusammenfassung; Figuren 1-5 *<br>--- | 2 | |
| A | US-A-2 178 095 (BOWSER)<br>* Anspruch 1; Figuren 1,2 *<br>--- | 1 | |
| A | GB-A- 908 806 (HAPPEL)<br>* Seite 4, Zeilen 80-96; Figur 8 *<br>--- | 1 | |
| A | US-A-3 963 466 (HYNES)<br>* Zusammenfassung; Figur 1 *<br>--- | 1 | |
| A | US-A-2 915 294 (CHRISTENSEN)<br>* Anspruch 1; Figur 4 *<br>----- | 1 | RECHERCHIERTE SACHGEBIETE (Int. Cl.4)<br><br>F 28 D<br>F 28 F<br>B 01 D |

Der vorliegende Recherchenbericht wurde für alle Patentansprüche erstellt

| Recherchenort | Abschlußdatum der Recherche | Prüfer |
|---|---|---|
| DEN HAAG | 17-05-1988 | HOERNELL, L.H. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
   Dokument

EPO FORM 1503 03.82 (P0403)